# EUROPEAN PATENT APPLICATION

(11) **EP 4 349 909 A1**
(43) Date of publication of application: **10.04.2024**
(21) Application number: 22811117.5
(22) Date of filing: 27.04.2022
(51) Int. Cl.: C08L 23/10, C08L 23/08

(54) **INJECTION MOLDED ARTICLE MADE OF PROPYLENE-BASED POLYMER COMPOSITION**

(30) Priority: 26.05.2021 JP 2021088526
(71) Applicant: Prime Polymer Co., Ltd., Tokyo 104-0028 (JP)
(72) Inventor: FUJII, Sumiaki, Ichihara-shi, Chiba 299-0108 (JP); OGUNI, Michihiko, Ichihara-shi, Chiba 299-0108 (JP)
(74) Representative: J A Kemp LLP
(86) International application number: PCT/JP2022/019059
(87) International publication number: WO 2022/249843

(57) **Abstract**

An objective of the present invention is to obtain an injection molded article made of a propylene-based polymer composition having favorable transparency and stiffness and an excellent impact strength, in other words, having an excellent balance among transparency, impact strength and stiffness, and the present invention relates to an injection molded article made of a propylene-based polymer composition containing a propylene-based polymer (A) satisfying requirements (a-i) and (a-ii) below within a range of 60 to 90 mass% and an ethylene-α-olefin copolymer (B) satisfying requirements (b-i) and (b-ii) below within a range of 10 to 40 mass%, provided that the total amount of (A) and (B) is 100 mass%.

Requirement (a-i)

A melt flow rate measured at a temperature of 230°C and a load of 2.16 kg according to JIS K 6921 is within a range of 1 to 50 g/10 minutes.

Requirement (a-ii)

A content of an α-olefin other than propylene obtained by infrared spectroscopy is 1 mass% or less (including zero).

Requirement (b-i)

A melt flow rate measured at a temperature of 190°C and a load of 2.16 kg according to JIS K 6921 is within a range of 0.1 to 15 g/10 minutes.

Requirement (b-ii)

A density measured according to JIS K 6922 is within a range of 900 to 920 kg/m³.

## Description

### Technical Field

The present invention relates to an injection molded article comprising a propylene-based polymer composition having favorable transparency and stiffness and an excellent impact strength.

### Background Art

Polyolefins (olefin-based polymers) represented by polyethylene or polypropylene require only a small amount of energy for production, are lightweight and excellent in terms of recyclability and are thus drawing more attention amid efforts for 3R (reduce, reuse and recycle), which is intended to form recycling society, in each industrial circle. Polyolefins are in use in a variety of fields such as daily miscellaneous goods, kitchen products, home appliances, machine parts, electric parts and automotive parts.

Among olefin-based polymers, polypropylene has excellent transparency, stiffness and heat resistance, but is poor in terms of cold resistance and impact resistance compared with polyethylene, and thus there have been a number of proposals regarding a method for improving the impact resistance of polypropylene.

As a method for improving the impact strength of polypropylene without impairing transparency and stiffness, a propylene resin composition of a propylene-block copolymer and an ethylene-α-olefin copolymer having a density within a range of 900 to 919 kg/m³ has been proposed (Patent Literature 1).

### Citation List

### Patent Literature

[Patent Literature 1]
WO2010/074001

### Summary of Invention

### Technical Problem

An objective of the present invention is to obtain an injection molded article comprising a propylene-based polymer composition having favorable transparency and stiffness and an excellent impact strength, in other words, having an excellent balance among transparency, impact strength and stiffness.

### Solution to Problem

The present invention relates to the following [1] to [8].
[1] An injection molded article comprising a propylene-based polymer composition containing a propylene-based polymer (A) satisfying requirements (a-i) and (a-ii) below within a range of 60 to 90 mass% and an ethylene-α-olefin copolymer (B) satisfying requirements (b-i) and (b-ii) below within a range of 10 to 40 mass%, provided that a total amount of (A) and (B) is 100 mass%;
   requirement (a-i) a melt flow rate measured at a temperature of 230°C and a load of 2.16 kg according to JIS K 6921 is within a range of 1 to 50 g/10 minutes.
   Requirement (a-ii) a content of an α-olefin other than propylene obtained by infrared spectroscopy is 1 mass% or less, including zero.
   Requirement (b-i) a melt flow rate measured at a temperature of 190°C and a load of 2.16 kg according to JIS K 6921 is within a range of 0.1 to 15 g/10 minutes.
   Requirement (b-ii) a density measured according to JIS K 6922 is within a range of 900 to 920 kg/m³.
[2] The injection molded article according to [1], wherein the propylene-based copolymer (A) is a propylene homopolymer.
[3] The injection molded article according to [1], wherein α-olefin in the ethylene-α-olefin copolymer (B) is 1-hexene.
[4] The injection molded article according to [1], wherein the melt flow rate of the requirement (b-i) is within a range of 1 to 5 g/10 minutes.
[5] The injection molded article according to [1], wherein the density of the requirement (b-ii) is within a range of 903 to 915 kg/m³.
[6] The injection molded article according to [1], wherein a content of a structural unit that is derived from ethylene in the ethylene-α-olefin copolymer (B) is within a range of 83 to 93 mol%.
[7] The injection molded article according to [1], wherein the propylene-based polymer composition is free of a nucleating agent.
[8] The injection molded article according to [1], wherein the injection molded article is any of a food container, a beverage container, a container and a daily necessity.

### Advantageous Effects of Invention

The injection molded article of the present invention has favorable transparency and stiffness and an excellent impact strength and thus can be suitably used as, for example, food containers, beverage containers, containers, and daily necessities.

### Description of Embodiments

### <Propylene-Based Polymer (A)>

A propylene-based polymer (A), which is one component that is contained in a propylene-based polymer composition forming an injection molded article of the present invention is a propylene polymer satisfying requirement (a-i) and requirement (a-ii) below. Hereinafter, the injection molded article of the present invention is abbreviated as "molded article" in some cases and the propylene-based polymer composition is abbreviated as "composition" in some cases.

### Requirement (a-i)

The melt flow rate (MFR₂₃₀) measured at a temperature of 230°C and a load of 2.16 kg according to JIS K 6921 is within a range of 1 to 50 g/10 minutes and preferably 1 to 30 g/10 minutes.

The propylene-based polymer (A) having an MFR₂₃₀ that satisfies the above-described range has favorable familiarity with an ethylene-α-olefin copolymer (B) according to the present invention, which will be described below.

When the MFR₂₃₀ is beyond the above-described range, there is a concern that the impact strength of a molded article to be obtained may become low, and, when the MFR₂₃₀ is below the above-described range, there is a concern that the back pressure at the time of injection molding of a composition to be obtained may become high and the injection molding may become difficult.

The propylene-based polymer composition containing the propylene-based polymer (A) that satisfies the above-described range has favorable injection moldability, and a molded article to be obtained has favorable mechanical properties and also has favorable transparency.

### Requirement (a-ii)

The content of α-olefin other than propylene obtained by infrared spectroscopy is 1 mass% or less (including zero), preferably 0.5 mass% or less (including zero), and more preferably, the propylene-based polymer (A) is a homopolymer of propylene.

In a case where a homopolymer of propylene is used as the propylene-based polymer (A) relating to the present invention, the heat resistance of a molded article to be obtained is superior, which is preferable.

The α-olefin other than propylene is at least one α-olefin selected from ethylene and α-olefin having 4 to 8 carbon atoms.

The propylene-based polymer composition containing the propylene-based polymer (A) that satisfies the above-described range has favorable injection moldability, and a molded article to be obtained has favorable mechanical properties and also has favorable transparency.

The propylene-based polymer (A) according to the present invention can be obtained by a variety of well-known manufacturing methods, and, specifically, the propylene-based polymer (A) can be obtained by homopolymerization of propylene in the case of containing propylene alone, or polymerization of propylene with 1 mass% or less of α-olefin, in the presence of a well-known olefin polymerization catalyst. Specific examples of the olefin polymerization catalyst include a titanium-based catalyst and a metallocene-based catalyst. Particularly, a titanium-based catalyst is preferable.

### <Ethylene-α-olefin copolymer (B)>

The ethylene-α-olefin copolymer (B), which is one component that is contained in the propylene-based polymer composition forming the injection molded article of the present invention (hereinafter, abbreviated as "molded article" in some cases), is an ethylene-α-olefin copolymer satisfying requirements (b-i) and (b-ii) below.

### Requirement (b-i)

The melt flow rate (MFR₁₉₀) measured at a temperature of 190°C and a load of 2.16 kg according to JIS K 6921 is within a range of 0.1 to 15 g/10 minutes, preferably 1 to 10 g/10 minutes and more preferably 1 to 5 g/10 minutes.

The ethylene-α-olefin copolymer (B) satisfying the above-described range has favorable familiarity with the propylene-based polymer (A) according to the present invention. Particularly, in a case where an ethylene-α-olefin copolymer (B) having an MFR₁₉₀ within a range of 1 to 5 g/10 minutes is used, the impact resistance of the molded article to be obtained becomes more favorable.

When the MFR₁₉₀ is beyond the above-described range, there is a concern that the impact strength of a molded article to be obtained may become low, and, when the MFR₁₉₀ is below the above-described range, there is a concern that the back pressure at the time of injection molding of a composition to be obtained may become high and the injection molding may become difficult.

The propylene-based polymer composition containing the ethylene-α-olefin copolymer (B) that satisfies the above-described range has favorable injection moldability, and a molded article to be obtained has favorable mechanical properties and also has favorable transparency.

### Requirement (b-ii)

The density measured according to JIS K 6922 is within a range of 900 to 920 kg/m³ and preferably 903 to 915 kg/m³.

A molded article that is obtained from the propylene-based polymer composition containing the ethylene-α-olefin copolymer (B) that satisfies the above-described range has an impact strength that is significantly higher than those of molded articles that are obtained from the propylene-based polymer (A) alone, has an excellent impact strength and has an excellent balance among transparency, impact strength and stiffness without significantly degrading transparency and stiffness.

The ethylene-α-olefin copolymer (B) according to the present invention is a copolymer containing a structural unit that is derived from ethylene as a main component. α-Olefin is preferably at least one α-olefin selected from the group consisting of α-olefins having 3 to 8 carbon atoms and more preferably at least one α-olefin selected from the group consisting of propylene, 1-butene, 1-hexene and 1-octene. Among them, 1-hexene is particularly preferable.

In the ethylene-α-olefin copolymer (B) according to the present invention, normally, the content of the structural unit that is derived from ethylene is within a range of 83 to 93 mol% and preferably 86 to 90 mol%.

### <<Propylene-Based Polymer Composition>>

The propylene-based polymer composition forming the injection molded article of the present invention (hereinafter, abbreviated as "molded article" in some cases) is a composition containing the propylene-based polymer (A) within a range of 60 to 90 mass%, preferably 70 to 90 mass% and more preferably 70 to 80 mass%, and the ethylene-α-olefin copolymer (B) within a range of 10 to 40 mass%, preferably 10 to 30 mass% and more preferably 10 to 20 mass%, provided that the total amount of (A) and (B) is 100 mass%.

The MFR₂₃₀ of the propylene-based polymer composition according to the present invention is normally within a range of 1 to 50 g/10 minutes, preferably 3 to 30 g/10 minutes and more preferably 5 to 20 g/10 minutes.

The propylene-based polymer composition according to the present invention may appropriately contain, in addition to the propylene-based polymer (A) and the ethylene-α-olefin copolymer (B), an additive, such as a neutralizer, an antioxidant, a heat stabilizer, a weathering agents, a lubricant, an ultraviolet absorber, an antistatic agent, an anti-blocking agent, an anti-fog agent, a dispersant, a flame retardant, an antibacterial agent, a fluorescent brightener, a cross-linking agent or a cross-linking coagent; a component that is exemplified by a colorant, such as a dye or a pigment (hereinafter, the component being referred to as "other component"), to an extent that the objective of the present invention is not impaired.

The propylene-based polymer composition according to the present invention is preferably free of a nucleating agent. In injection molded articles comprising a composition containing a nucleating agent, stiffness also increases at the same time as transparency, and thus, in uses where flexibility is required, it becomes easy to optimize the balance among transparency, impact strength and stiffness when no nucleating agent is added.

The injection molded article comprising the propylene-based polymer composition according to the present invention has an impact strength that is significantly higher than those of molded articles that are obtained from the propylene-based polymer (A) alone, has an excellent impact strength and has an excellent balance among transparency, impact strength and stiffness without significantly degrading transparency and stiffness.

### <Method For Manufacturing Propylene-Based Polymer Composition>

Regarding the propylene-based polymer composition according to the present invention, the propylene-based polymer composition can be obtained by mixing the propylene-based polymer (A) and the ethylene-α-olefin copolymer (B) with a dry blender, a Henschel mixer, a Banbury mixer or the like or by mixing the propylene-based polymer (A) and the ethylene-α-olefin copolymer (B) and then melt-kneading the mixture with, for example, a single screw extruder, a twin screw extruder, and a high-speed twin screw extruder.

### <Injection Molded Article>

The injection molded article of the present invention is a molded article formed by injection molding of the propylene-based polymer composition according to the present invention.

### <<Method for Manufacturing Injection Molded Article>>

The injection molded article of the present invention can be manufactured by heating and melting the propylene-based polymer composition according to the present invention using a well-known injection molding machine, injecting the melt into a mold, cooling and solidifying the melt and then removing the solid from the mold.

More specifically, for example, the propylene-based polymer composition is fed into a hopper of an injection molding machine, and the propylene-based polymer composition is sent into a cylinder that has been heated to approximately 200°C to 250°C, kneaded and plasticized and made into a molten state. This is injected from a nozzle into a mold that is closed with a mold clamping mechanism and that has a temperature adjusted to 5 to 50°C, preferably 10 to 40°C, with, for example, cooling water, and warm water at a high pressure and a high speed (a maximum pressure of 700 to 1500 kg/cm³). The injected propylene-based polymer composition is cooled and solidified by cooling from the mold, and the mold is opened with the mold clamping mechanism to obtain an injection molded article.

Alternatively, injection stretch blow molding can be conducted as follows: for example, the propylene-based polymer composition is fed into a hopper of an injection molding machine, and a resin is sent into a cylinder that has been heated to approximately 200°C to 250°C, kneaded and plasticized and made into a molten state. This is injection-molded from a nozzle into a mold that is closed with a mold clamping mechanism and that has a temperature adjusted to 5 to 80°C, preferably 10 to 60°C, with, for example, cooling water, and warm water at a high pressure and a high speed (a maximum pressure of 700 to 1500 kg/cm³), cooled in the mold for 1.0 to 3.0 seconds to form a preform, then, the mold is immediately opened, the preform is stretch-oriented in the vertical direction using a stretching rod and further stretch-oriented in the horizontal direction by blow molding to obtain an injection molded article.

### <<Uses of Injection Molded Article>>

The injection molded article of the present invention is, for example, a food container, a beverage container, a container, and a daily necessity. More specifically, it can be broadly used as, for example, a solid food container for jelly, pudding, yogurt or the like (dessert cup), a chemical container, and an industrial liquid container.

As the dessert cup, the thickness of the container body portion (thinnest portion) is preferably within a range of 0.3 to 2.0 mm. A propylene-based resin composition of the present invention has a sufficient impact strength even when thinned as described above and does not break into debris in the manufacturing process.

The injection molded article of the present invention has a preferable balance among impact resistance, transparency and stiffness even in these products.

### Examples

Hereinafter, the present invention will be described further specifically based on examples. However, the present invention is not limited to these examples.

Each polymer and the like used in the examples and comparative examples will be described below.

### (1) Propylene-Based Polymer (A)

As a propylene-based polymer (A), the following propylene-based polymer was used.

### (1-1) Propylene-Based Polymer (A-1)

A propylene homopolymer having an MFR₂₃₀ of 15 g/10 minutes, manufactured by Prime Polymer Co., Ltd. under of a trade name of PRIME POLYPRO J106MG, was used.

### (2) Ethylene-α-Olefin Copolymer (B)

As an ethylene-α-olefin copolymer (B), the following ethylene-α-olefin copolymers were used.

### (2-1) Ethylene-1-Hexene Copolymer (B-1)

An ethylene-1-hexene copolymer (B-1) having an MFR₁₉₀ of 3.8 g/10 minutes and a density of 903 kg/m³: manufactured by Prime Polymer Co., Ltd. under of a trade name of EVOLUE SP0540, was used.

### (2-2) Ethylene-1-Hexene Copolymer (B-2)

An ethylene-1-hexene copolymer (B-2) having an MFR₁₉₀ of 3.8 g/10 minutes and a density of 918 kg/m³: manufactured by Prime Polymer Co., Ltd. under of a trade name of EVOLUE SP2040, was used.

### (2-3) Ethylene-1-Hexene Copolymer (B-3)

An ethylene-1-hexene copolymer (B-3) having an MFR₁₉₀ of 1 g/10 minutes and a density of 915 kg/m³: manufactured by Prime Polymer Co., Ltd. under of a trade name of EVOLUE SP0510, was used.

### (2-4) Ethylene-1-Hexene Copolymer (B-4)

An ethylene-1-hexene copolymer (B-4) having an MFR₁₉₀ of 2 g/10 minutes and a density of 913 kg/m³: manufactured by Prime Polymer Co., Ltd. under of a trade name of EVOLUE SP1520, was used.

### (2-5) Ethylene-1-Hexene Copolymer (B-5)

An ethylene-1-hexene copolymer (B-5) having an MFR₁₉₀ of 10 g/10 minutes and a density of 911 kg/m³: manufactured by Prime Polymer Co., Ltd. under of a trade name of EVOLUE SP1071C, was used.

### (3) Ethylene-α-Olefin Copolymer (C)

As an ethylene-α-olefin copolymer, the following ethylene-α-olefin copolymers were used.

### (3-1) Ethylene-α-Olefin Copolymer (C-1)

An ethylene-propylene copolymer (C-1) having an MFR₁₉₀ of 1.5 g/10 minutes and a density of 862 kg/m³: manufactured by Exxon Mobil Corporation under of a trade name of VISTAMAXX 6102FL, was used.

### (3-2) Ethylene-α-Olefin Copolymer (C-2)

An ethylene-propylene copolymer (C-2) having an MFR₁₉₀ of 4 g/10 minutes and a density of 879 kg/m³: manufactured by Exxon Mobil Corporation under of a trade name of VISTAMAXX 3980FL, was used.

Properties of injection molded articles obtained in the examples and the comparative examples were measured by the following methods.

### (1) Transparency

Regarding the central portion of the injection molded article, haze was measured according to JIS K 7136. Total haze is the total of internal haze and external haze.

### (2) High-Speed Surface Impact Test (High-Rate Impact)

An injection molded article that was a 200 mm × 200 mm × 2.0 mm flat plate was used. A test piece for measurement was placed on a supporting table with a hole having an inner diameter of 40 mmϕ and fixed using a specimen holder having an inner diameter of 76 mmϕ, the test piece was hit with a striker having a semispherical impact surface and a diameter of 12.7 mmϕ at an impact rate of 1 m/second, and the puncture energy (J) was obtained according to JIS K 7211-2. The average value of the puncture energies of four test pieces for measurement was regarded as the surface impact strength (high-rate impact).

### (3) Stiffness

The tensile modulus of elasticity of a dumbbell test piece was measured according to JIS K 7161, K 7162-1.

### [Example 1]

A propylene-based polymer composition obtained by mixing 90 mass% of the propylene-based polymer (A-1) and 10 mass% of the ethylene-1-hexene copolymer (B-1) was made into an injection molded article that was a 200 mm × 200 mm × 2.0 mm flat plate for high-speed surface impact test and for transparency (haze) measurement and an injection molded article that was a tensile modulus of elasticity test piece (dumbbell test piece according to JIS K 7161 and K 7162-1) using an injection molding machine (FANUC ROBOSHOT α100C manufactured by FANUC CORPORATION) under conditions of a molten resin temperature of 200°C, a mold temperature of 40°C, an average injection rate of 35 mm/second, a pressure dwell of 10 seconds and a total cycle time of 45 seconds.

Properties were measured by the above-described methods using the obtained injection molded articles.

The results are shown in Table 1.

### [Examples 2 to 11]

Injection molded articles were produced in the same manner as in Example 1 except that propylene-based polymer compositions of the propylene-based polymer (A-1) and the ethylene-1-hexene copolymer (B-1) or the like shown in Table 1 were used instead of the propylene-based polymer composition used in Example 1.

Properties were measured by the above-described methods using the obtained injection molded articles.

The results are shown in Table 1.

### [Comparative Example 1]

Injection molded articles were produced in the same manner as in Example 1 except that the propylene-based polymer (A-1) was singly used instead of the propylene-based polymer composition used in Example 1.

Properties were measured by the above-described methods using the obtained injection molded articles.

Table 2 shows the results.

### [Comparative Examples 2 to 8]

Injection molded articles were produced in the same manner as in Example 1 except that propylene-based polymer compositions of the propylene-based polymer (A-1) and the ethylene-α-olefin copolymer (C-1) or the like shown in Table 2 were used instead of the propylene-based polymer composition used in Example 1.

Properties were measured by the above-described methods using the obtained injection molded articles.

Table 2 shows the results.

**Table 1**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Polymer (A-1) | | mass% | 90 | 80 | 70 | 90 | 80 | 70 | 80 | 70 | 80 | 70 | 80 |
| Copolymer (B-1) | | mass% | 10 | 20 | 30 | - | - | - | - | - | - | - | - |
| Copolymer (B-2) | | mass% | - | - | - | 10 | 20 | 30 | - | - | - | - | - |
| Copolymer (B-3) | | mass% | - | - | - | - | - | - | 20 | 30 | - | - | - |
| Copolymer (B-4) | | mass% | - | - | - | - | - | - | - | - | 20 | 30 | - |
| Copolymer (B-5) | | mass% | - | - | - | - | - | - | - | - | - | - | 20 |
| Total haze | | % | 65 | 62 | 58 | 66 | 66 | 65 | 64 | 63 | 63 | 60 | 62 |
| Tensile modulus of elasticity | | MPa | 1848 | 1593 | 1382 | 1889 | 1673 | 1493 | 1696 | 1517 | 1673 | 1474 | 1626 |
| High-rate impact | 23°C | J | 2.6 | 21.3 | 20.9 | 0.4 | 19.1 | 20.8 | 21.2 | 24.3 | 21.7 | 22.8 | 17.7 |
| | 0°C | J | 0.26 | 5.1 | 21.7 | 0.27 | 0.5 | 18.7 | 1.8 | 22.8 | 1.4 | 20.7 | 0.6 |
| | -20°C | J | 0.28 | 0.4 | 21.3 | 0.26 | 0.3 | 1.23 | 0.41 | 14.6 | 0.32 | 4.5 | 0.3 |

**Table 2**

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Polymer (A-1) | | mass% | 100 | 95 | 90 | 80 | 70 | 90 | 80 | 70 |
| Copolymer (C-1) | | mass% | 0 | 5 | 10 | 20 | 30 | - | - | - |
| Copolymer (C-2) | | mass% | - | - | - | - | - | 10 | 20 | 30 |
| Total haze | | % | 68 | 79 | 87 | 92 | 93 | 67 | 66 | 64 |
| Tensile modulus of elasticity | | MPa | 2167 | 1918 | 1691 | 1316 | 1031 | 1679 | 1274 | 1034 |
| High-rate impact | 23°C | J | 0.28 | 0.47 | 4.2 | 17 | 22 | 0.43 | 13 | 22 |
| | 0°C | J | 0.23 | 0.26 | 0.3 | 3.6 | 23 | 0.26 | 0.30 | 0.56 |
| | -20°C | J | 0.21 | 0.25 | 0.27 | 0.32 | 0.63 | 0.27 | 0.27 | 0.26 |

As shown in Table 1 and Table 2, the injection molded articles obtained in Examples 1 to 11 have improved in haze compared with the injection molded article made of the propylene-based polymer (A) alone, which was obtained in Comparative Example 1. In addition, the impact strengths at 23°C, the impact strengths at 0°C and the impact strengths at -20°C have been improved.

On the other hand, in the injection molded articles made of the propylene-based polymer composition containing the ethylene-α-olefin copolymer having a density of 862 kg/m³, which were obtained in Comparative Examples 2 to 5, the haze has deteriorated, and no improvement in the impact strengths at -20°C can be found.

In addition, in the injection molded articles made of the propylene-based polymer composition containing the ethylene-α-olefin copolymer having a density of 879 kg/m³, which were obtained in Comparative Examples 6 to 8, the haze has not deteriorated, but no improvement in the impact strengths at 0°C and the impact strengths at -20°C can be found.

## Claims

1. An injection molded article comprising a propylene-based polymer composition containing a propylene-based polymer (A) satisfying requirements (a-i) and (a-ii) below within a range of 60 to 90 mass% and an ethylene-α-olefin copolymer (B) satisfying requirements (b-i) and (b-ii) below within a range of 10 to 40 mass%, provided that a total amount of (A) and (B) is 100 mass%;
requirement (a-i) a melt flow rate measured at a temperature of 230°C and a load of 2.16 kg according to JIS K 6921 is within a range of 1 to 50 g/10 minutes,
requirement (a-ii) a content of an α-olefin other than propylene obtained by infrared spectroscopy is 1 mass% or less, including zero,
requirement (b-i) a melt flow rate measured at a temperature of 190°C and a load of 2.16 kg according to JIS K 6921 is within a range of 0.1 to 15 g/10 minutes, and
requirement (b-ii) a density measured according to JIS K 6922 is within a range of 900 to 920 kg/m³.

2. The injection molded article according to claim 1, wherein the propylene-based copolymer (A) is a propylene homopolymer.

3. The injection molded article according to claim 1,
wherein α-olefin in the ethylene-α-olefin copolymer (B) is 1-hexene.

4. The injection molded article according to claim 1,
wherein the melt flow rate of the requirement (b-i) is within a range of 1 to 5 g/10 minutes.

5. The injection molded article according to claim 1,
wherein the density of the requirement (b-ii) is within a range of 903 to 915 kg/m³.

6. The injection molded article according to claim 1,
wherein a content of a structural unit that is derived from ethylene in the ethylene-α-olefin copolymer (B) is within a range of 83 to 93 mol%.

7. The injection molded article according to claim 1,
wherein the propylene-based polymer composition is free of a nucleating agent.

8. The injection molded article according to claim 1, wherein the injection molded article is any of a food container, a beverage container, a container and a daily necessity.
